# EUROPEAN PATENT APPLICATION

(11) **EP 4 592 608 A1**
(43) Date of publication of application: **30.07.2025**
(21) Application number: 24217539.6
(22) Date of filing: 04.12.2024
(51) Int. Cl.: F24F 11/64, F24F 11/77

(54) **HEAT DISSIPATION PROCESSING METHOD, APPARATUS, DEVICE AND MEDIUM FOR AIR CONDITIONER OUTDOOR UNIT**

(30) Priority: 26.01.2024 CN 202410115461
(71) Applicant: Xiaomi Technology (Wuhan) Co., Ltd., Wuhan, Hubei 430000 (CN); Beijing Xiaomi Mobile Software Co., Ltd., Beijing 100085 (CN)
(72) Inventor: WANG, Ruifeng, Wuhan 430000 (CN); PENG, Guangqian, Wuhan 430000 (CN); YU, Qi, Wuhan 430000 (CN)
(74) Representative: Dehns Germany Partnerschaft mbB

(57) **Abstract**

The present disclosure relates to a heat dissipation processing method, apparatus, device and medium for air conditioner outdoor unit, which effectively solves the technical problem that when the air conditioner is in a high ambient temperature condition, the temperature rise conditions of a compressor module and a fan module in the air conditioner outdoor unit do not match each other, resulting in poor heat dissipation of the air conditioner outdoor unit and affecting the cooling capacity and operating reliability of the air conditioner under extremely high temperature conditions. The heat dissipation processing method for air conditioner outdoor unit includes: when the air conditioner is in cooling operation, obtaining the voltage of the air conditioner outdoor unit; and determining the fan speed of the air conditioner outdoor unit according to the voltage of the air conditioner outdoor unit.

## Description

### TECHNICAL FIELD

The present disclosure relates to the technical field of air conditioner, and in particular to a heat dissipation processing method, apparatus, device and medium for an air conditioner outdoor unit.

### BACKGROUND

With the continuous iteration of modern air conditioner installation technology, more and more air conditioners need to be installed in air conditioner sites with grilles. However, installing in grille sites will lead to poor ventilation and heat dissipation, causing the temperature near the air conditioner outdoor unit to be much higher than the ambient temperature. However, in order to ensure that the air conditioner can operate reliably under high ambient temperature conditions, it is necessary to focus on controlling the temperature rise of circuit components. Specifically, as the ambient temperature rises, the heat dissipation of circuit components deteriorates. When the temperature exceeds the allowable temperature, the circuit components will be damaged. In addition, different circuit components have different temperature rise performances at different voltages, and the reliability of the entire machine needs to be formulated based on the circuit component with the worst temperature rise. Therefore, how to improve and balance the temperature rise of each component is the main problem in achieving extremely high temperature cooling operation.

### SUMMARY

In order to solve the above-mentioned technical problems, the present invention provides a heat dissipation processing method, apparatus, device and medium for an air conditioner outdoor unit, which effectively solves the technical problem that when the air conditioner is operating under high ambient temperature conditions, the temperature rise conditions of the compressor module and the fan module in the air conditioner outdoor unit do not match each other, resulting in poor heat dissipation of the air conditioner outdoor unit and affecting the cooling capacity and operating reliability of the air conditioner under extremely high temperature conditions.

In a first aspect, an embodiment of the present disclosure provides a heat dissipation processing method for air conditioner outdoor unit, the method including:
obtaining a voltage of an air conditioner outdoor unit during a cooling operation; and
determining a fan speed of the air conditioner outdoor unit according to the voltage of the air conditioner outdoor unit.

In a possible implementation, in the method provided in the embodiment of the present disclosure, the obtaining the voltage of the air conditioner outdoor unit during the air conditioning cooling mode includes:
obtaining an external ambient temperature of the air conditioner outdoor unit during the cooling operation; and
obtaining the voltage of the air conditioner outdoor unit in a case that the external ambient temperature is greater than a first preset temperature.

In a possible implementation, in the method provided in the embodiment of the present disclosure, the determining the fan speed of the air conditioner outdoor unit according to the voltage of the air conditioner outdoor unit includes:
determining a first speed as the fan speed in a case that the voltage of the air conditioner outdoor unit is greater than a first preset voltage;
determining a second speed as the fan speed in a case that the voltage of the air conditioner outdoor unit is less than the first preset voltage and greater than a second preset voltage; and
determining a third speed as the fan speed in a case that the voltage of the air conditioner outdoor unit is less than the second preset voltage, wherein the first speed is less than the second speed, and the second speed is less than the third speed.

In a possible implementation, in the method provided in the embodiment of the present disclosure, the determining the fan speed of the air conditioner outdoor unit according to the voltage of the air conditioner outdoor unit includes:
searching a preset voltage table for a target fan speed corresponding to the voltage of the air conditioner outdoor unit according to the voltage of the air conditioner outdoor unit; and
determining the target fan speed as the fan speed of the air conditioner outdoor unit.

In a possible implementation, in the method provided in the embodiment of the present disclosure, the method further includes:
acquiring a compressor temperature of the air conditioner outdoor unit in real time; and
turning off the air conditioner outdoor unit in a case that the compressor temperature is greater than a second preset temperature.

In a possible implementation, in the method provided in the embodiment of the present disclosure, the method further includes:
acquiring a fan temperature of the air conditioner outdoor unit in real time; and
correcting the fan speed in a case that a difference between the compressor temperature and the fan temperature is greater than a third preset temperature.

In a possible implementation, in the method provided in the embodiment of the present disclosure, the correcting the fan speed in the case that the difference between the compressor temperature and the fan temperature is greater than the third preset temperature includes:
determining a fan speed correction value according to a ratio of the difference to the external ambient temperature in the case that the difference between the compressor temperature and the fan temperature is greater than the third preset temperature; and
correcting the fan speed based on the fan speed correction value.

In a second aspect, an embodiment of the present invention provides a heat dissipation processing apparatus for air conditioner outdoor unit, the apparatus includes:
an obtaining unit, configured to obtain a voltage of an air conditioner outdoor unit during a cooling operation; and
a determining unit, configured to determine a fan speed of the air conditioner outdoor unit according to the voltage of the air conditioner outdoor unit.

In a possible implementation, in the apparatus provided in the embodiment of the present disclosure, the obtaining unit is further configured to:
obtain an external ambient temperature of the air conditioner outdoor unit during the cooling operation; and
obtain the voltage of the air conditioner outdoor unit in a case that the external ambient temperature is greater than a first preset temperature.

In a possible implementation, in the apparatus provided in the embodiment of the present disclosure, the determining unit is further configured to:
determine a first speed as the fan speed in a case that the voltage of the air conditioner outdoor unit is greater than a first preset voltage;
determine a second speed as the fan speed in a case that the voltage of the air conditioner outdoor unit is less than the first preset voltage and greater than a second preset voltage; and
determine a third speed as the fan speed in a case that the voltage of the air conditioner outdoor unit is less than the second preset voltage, wherein the first speed is less than the second speed, and the second speed is less than the third speed.

In a possible implementation, in the apparatus provided in the embodiment of the present disclosure, the determining unit is further configured to:
search a preset voltage table for a target fan speed corresponding to the voltage of the air conditioner outdoor unit according to the voltage of the air conditioner outdoor unit; and
determine the target fan speed as the fan speed of the air conditioner outdoor unit.

In a possible implementation, in the apparatus provided in the embodiment of the present disclosure, the determining unit is further configured to:
acquire a compressor temperature of the air conditioner outdoor unit in real time; and
turn off the air conditioner outdoor unit in a case that the compressor temperature is greater than a second preset temperature.

In a possible implementation, in the apparatus provided in the embodiment of the present disclosure, the determining unit is further configured to:
acquire a fan temperature of the air conditioner outdoor unit in real time; and
correct the fan speed in a case that a difference between the compressor temperature and the fan temperature is greater than a third preset temperature.

In a possible implementation, in the apparatus provided in the embodiment of the present disclosure, the determining unit is further configured to:
determine a fan speed correction value according to a ratio of the difference to the external ambient temperature in the case that the difference between the compressor temperature and the fan temperature is greater than the third preset temperature; and
correct the fan speed based on the fan speed correction value.

In a third aspect, an embodiment of the present invention provides an electronic device, including
a memory;
a processor; and
a computer program;
wherein the computer program is stored in the memory and is configured to be executed by the processor to implement steps of the above heat dissipation processing method for air conditioner outdoor unit.

In a fourth aspect, an embodiment of the present invention provides a computer-readable storage medium having a computer program stored thereon, and when the computer program is executed by a processor, the steps of the heat dissipation processing method for air conditioner outdoor unit as described above are implemented.

Embodiments of the present disclosure provide a heat dissipation processing method for air conditioner outdoor unit, including:

First, when the air conditioner is in cooling operation, the voltage of the outdoor unit of the air conditioner is obtained, and then the fan speed of the outdoor unit of the air conditioner is determined based on the voltage of the outdoor unit of the air conditioner. Using the heat dissipation processing method of the outdoor unit of the air conditioner provided by the present disclosure, the temperature rise of each component of the air conditioner can be improved and balanced by adjusting the fan speed of the outdoor unit of the air conditioner, so that the air conditioner has a significantly improved heat dissipation effect under high ambient temperatures when the temperature of the outdoor unit is high, thereby improving the cooling capacity and operational reliability of air conditioners under high temperature conditions.

### BRIEF DESCRIPTION OF THE DRAWINGS

The accompanying drawings, which are incorporated in and constitute a part of this specification, illustrate embodiments consistent with the disclosure and together with the description, serve to explain the principles of the disclosure.

In order to more clearly illustrate the embodiments of the present disclosure or the technical solutions in the prior art, the drawings required for use in the embodiments or the description of the prior art will be briefly introduced below. Obviously, for those of ordinary skill in the art, other drawings can be obtained based on these drawings without paying any creative effort.
FIG. 1 is a schematic flow chart of a heat dissipation processing method for an air conditioner outdoor unit provided by an embodiment of the present disclosure;
FIG. 2 is a schematic diagram of a specific flow chart of a heat dissipation processing method for an air conditioner outdoor unit provided by an embodiment of the present disclosure;
FIG. 3 is a schematic diagram of a specific flow chart of another heat dissipation processing method for an air conditioner outdoor unit provided by an embodiment of the present disclosure;
FIG. 4 is a schematic diagram of a specific flow chart of another heat dissipation processing method for an air conditioner outdoor unit provided by an embodiment of the present disclosure;
FIG. 5 is a schematic diagram of a specific flow chart of another heat dissipation processing method for an air conditioner outdoor unit provided by an embodiment of the present disclosure;
FIG. 6 is a schematic diagram of a specific flow chart of another heat dissipation processing method for an air conditioner outdoor unit provided by an embodiment of the present disclosure;
FIG. 7 is a schematic structural diagram of a heat dissipation processing apparatus for an air conditioner outdoor unit provided by an embodiment of the present disclosure;
FIG. 8 is a schematic diagram of the structure of an electronic device provided in an embodiment of the present disclosure.

### DETAILED DESCRIPTION

In order to more clearly understand the above-mentioned objectives, features and advantages of the present disclosure, the scheme of the present disclosure will be further described below. It should be noted that the embodiments of the present disclosure and the features in the embodiments can be combined with each other without conflict.

In the following description, many specific details are set forth to facilitate a full understanding of the present disclosure, but the present disclosure may also be implemented in other ways different from those described herein; it is obvious that the embodiments in the specification are only part of the embodiments of the present disclosure, rather than all of the embodiments.
1. In the embodiments of the present disclosure, the term "and/or" describes the association relationship of associated objects, indicating that three relationships may exist. For example, A and/or B may represent three situations: A exists alone, both A and B exist, and B exists alone. The character "/" generally indicates that the associated objects before and after are in an "or" relationship.

With the continuous iteration of modern air conditioner installation technology, more and more air conditioners need to be installed in air conditioner site with grilles. However, installing in grille site will lead to poor ventilation and heat dissipation, causing the temperature near the air conditioner outdoor unit to be much higher than the ambient temperature. However, in order to ensure that the air conditioner can operate reliably under high ambient temperature conditions, it is necessary to focus on controlling the temperature rise of circuit components. Specifically, as the ambient temperature rises, the heat dissipation of circuit components deteriorates. When the temperature exceeds the allowable temperature, the circuit components will be damaged. In addition, different circuit components have different temperature rise performances at different voltages, and the reliability of the entire machine needs to be formulated based on the circuit component with the worst temperature rise. Therefore, how to improve and balance the temperature rise of each component is the main problem in achieving extremely high temperature refrigeration operation.

There are differences in the temperature rise performance of different circuit components of the air conditioner under different voltages, among which the difference between the compressor module and the fan module is particularly prominent. At low voltage, the current of the whole machine increases, the temperature rise of the compressor module will worsen, while the temperature rise of the fan module will be relatively good; at high voltage, the current of the whole machine decreases, the temperature rise of the compressor module will improve, and the temperature rise of the fan module will worsen. This is because the cross-loss of the internal insulated-gate bipolar transistor (IGBT) or metal-oxide-semiconductor field-effect transistor (MOSFET) plays a leading role in the case of high voltage and low current of the fan module. Therefore, the higher the voltage, the greater the cross-loss and the higher the temperature rise; while the compressor module is a high-voltage, high-current device, and its conduction loss plays a maj or role, and at low voltage, the current is greater, and the temperature rise is higher.

In order to ensure the reliability of the whole air conditioner, it is necessary to formulate it based on the circuit device with the worst temperature rise. That is, under low voltage, to ensure the temperature rise of the compressor module, the power of the whole machine needs to be reduced; under high voltage, to ensure the temperature rise of the fan module, the power of the whole machine needs to be reduced, which greatly limits the cooling capacity of the whole machine. The heat dissipation of the circuit devices of the air conditioner outdoor unit is mainly achieved by running the fan to guide the airflow to flow in the heat dissipation flow channel. The higher the fan speed, the better the heat dissipation of the circuit devices including the compressor module, but the power of the fan module increases, and the heat generation will worsen.

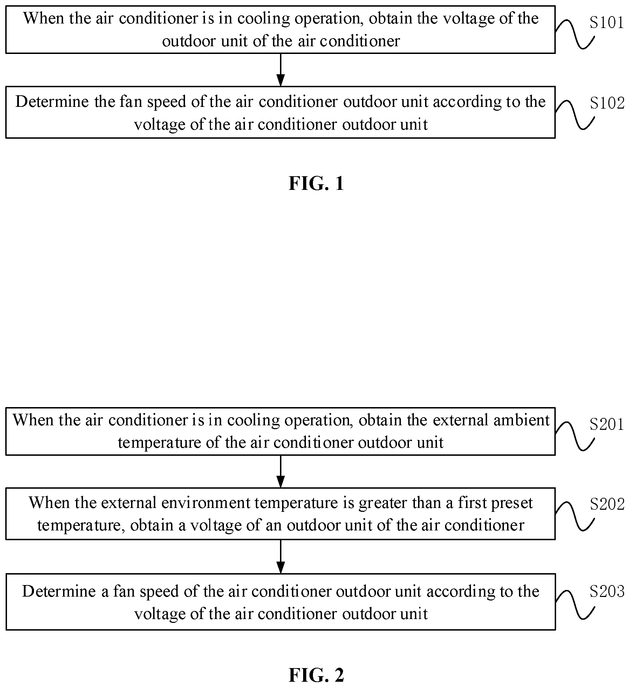

FIG. 1 is a schematic flow chart of a heat dissipation processing method for an air conditioner outdoor unit provided by an embodiment of the present disclosure, which specifically includes the following steps S101 to S102 as shown in FIG. 1:

S101. When the air conditioner is in cooling operation, obtain the voltage of the outdoor unit of the air conditioner.

In specific implementation, when the air conditioner is in cooling mode, the voltage of the air conditioner outdoor unit is obtained in real time.

Preferably, when the air conditioner is in cooling mode, the external ambient temperature of the air conditioner outdoor unit is firstly acquired, and then when the external ambient temperature is higher than a certain threshold, the voltage of the air conditioner outdoor unit is acquired.

S102. Determine the fan speed of the air conditioner outdoor unit according to the voltage of the air conditioner outdoor unit.

During specific implementation, the fan speed of the air conditioner outdoor unit is determined according to the magnitude of the voltage value of the air conditioner outdoor unit. Specifically, under low voltage, the fan runs at high speed, which can improve the temperature rise of components such as the compressor module, and achieve improved overall machine capacity and reliability; under high voltage, the fan runs at low speed, which can improve the temperature rise of the fan module, and achieve improved overall machine capacity and reliability, thereby dissipating heat for the air conditioner outdoor unit to enable it to operate normally.

FIG. 2 is a schematic diagram of a specific flow chart of a heat dissipation processing method for an air conditioner outdoor unit provided by an embodiment of the present disclosure, which specifically includes the following steps S201 to S203 as shown in FIG. 2:

S201. When the air conditioner is in cooling operation, obtain the external ambient temperature of the air conditioner outdoor unit.

In specific implementation, when the air conditioner is in cooling mode, the external ambient temperature of the air conditioner outdoor unit is obtained. The external ambient temperature can be obtained by a sensor disposed outside or inside the air conditioner outdoor unit. It can be obtained at a certain time interval, such as 20 seconds or 5 minutes. The specific value configuration can be set according to the needs. By obtaining the external ambient temperature at intervals, the monitored external ambient temperature is more accurate.

S202. When the external ambient temperature is greater than a first preset temperature, obtain a voltage of an outdoor unit of the air conditioner.

In specific implementation, the magnitude of the external ambient temperature is compared with the first preset temperature. When the external ambient temperature is lower than the first preset temperature, the air conditioner can perform cooling normally, and the whole machine capacity and reliability are high. At this time, there is no need to perform heat dissipation processing on the air conditioner outdoor unit, and the fan of the air conditioner outdoor unit runs at a normal speed. When the external ambient temperature is higher than the first preset temperature, it means that the air conditioner outdoor unit is in an extremely high temperature condition, which may affect the cooling effect of the air conditioner, so it is necessary to perform heat dissipation processing on the air conditioner outdoor unit. At this time, it is necessary to obtain the voltage of the air conditioner outdoor unit, which can be obtained through an electrical data collector or calculated through other electrical data of the air conditioner.

The first preset temperature is used to determine whether the current external ambient temperature may affect the operation of the air conditioner. This temperature can be a fixed value preset in advance, such as 55 degrees Celsius; or multiple levels corresponding to multiple temperatures can be set according to different usage conditions for users to select and set. For example, the heat dissipation function of the external unit includes 3 levels, and the corresponding first preset temperatures are 45 degrees Celsius, 50 degrees Celsius and 55 degrees Celsius, respectively. The embodiments of the present disclosure do not limit this.

S203. Determine a fan speed of the air conditioner outdoor unit according to the voltage of the air conditioner outdoor unit.

In specific implementation, the fan speed of the air conditioner outdoor unit is determined according to the voltage value of the air conditioner outdoor unit. Specifically, the fan speed can be set to a higher value at low voltage, so that the temperature rise of components such as the compressor module can be improved, and the overall capacity and reliability can be improved. At high voltage, the fan speed is set to a lower value, so that the temperature rise of the fan module can be improved, and the overall capacity and reliability can be improved, thereby performing heat dissipation processing on the air conditioner outdoor unit to enable it to operate normally. Specifically, when the voltage of the air conditioner outdoor unit is lower than 200V, the fan speed can be set to 800rpm, and when the voltage of the air conditioner outdoor unit is higher than 200V, the fan speed can be set to 600rpm. This is not limited in the embodiments of the present disclosure.

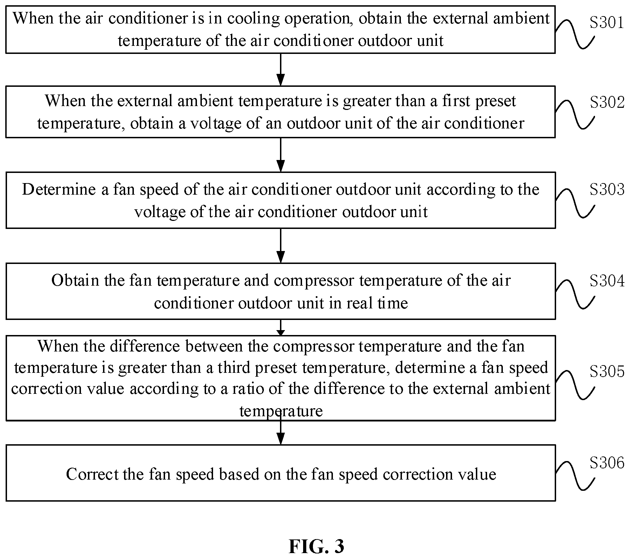

FIG. 3 is a flow chart of another heat dissipation processing method for an air conditioner outdoor unit provided by an embodiment of the present disclosure, which specifically includes the following steps S301 to S306 as shown in FIG. 3:

S301. When the air conditioner is in cooling operation, obtain the external ambient temperature of the air conditioner outdoor unit.

S302. When the external ambient temperature is greater than a first preset temperature, obtain a voltage of an outdoor unit of the air conditioner.

Steps S301 and S302 are the same as the above-mentioned steps S201 and S202, and are not described in detail here.

S303. Determine a fan speed of the air conditioner outdoor unit according to the voltage of the air conditioner outdoor unit.

In specific implementation, when the voltage of the air conditioner outdoor unit is greater than the first preset voltage, the fan speed is determined to be the first speed; when the voltage of the air conditioner outdoor unit is less than the first preset voltage and greater than the second preset voltage, the fan speed is determined to be the second speed; when the voltage of the air conditioner outdoor unit is less than the second preset voltage, the fan speed is determined to be the third speed.

In one embodiment, the values of the first preset voltage, the second preset voltage, the first speed, the second speed and the third speed can be selected according to actual conditions, and the embodiments of the present disclosure do not limit this. Preferably, the first preset voltage can be selected from any voltage value between 180 and 200 V, the second preset voltage can be selected from any voltage value between 220 and 240 V, the first speed can be selected from any value between 800 and 900 rpm, the second speed can be selected from any value between 700 and 800 rpm, and the third speed can be selected from any value between 600 and 700 rpm.

S304. Obtain the fan temperature and compressor temperature of the air conditioner outdoor unit in real time.

In specific implementation, the temperature sensor is used to obtain the fan temperature and compressor temperature of the air conditioner outdoor unit in real time. The specific interval time can be set according to actual conditions, such as 1 second, 20 seconds, etc.

S305. When the difference between the compressor temperature and the fan temperature is greater than a third preset temperature, determine a fan speed correction value according to a ratio of the difference to the external ambient temperature.

In specific implementation, the difference between the compressor temperature and the fan temperature is first calculated, and then when the difference between the compressor temperature and the fan temperature is greater than the third preset temperature, the fan speed correction value is determined according to the ratio of the difference between the compressor temperature and the fan temperature to the external ambient temperature, and finally the fan speed is corrected based on the fan speed correction value. For example, if the third preset temperature is 5 degrees Celsius and the ambient temperature is 30 degrees Celsius, then when the difference between the compressor temperature and the fan temperature is greater than 5 degrees Celsius, the ratio of the difference between the compressor temperature and the fan temperature to the external ambient temperature is calculated to be 1/6, and at this time the fan speed correction value is + 20rpm.

S306. Correct the fan speed based on the fan speed correction value.

In a specific implementation, the fan speed is corrected according to the fan speed correction value determined in S305.

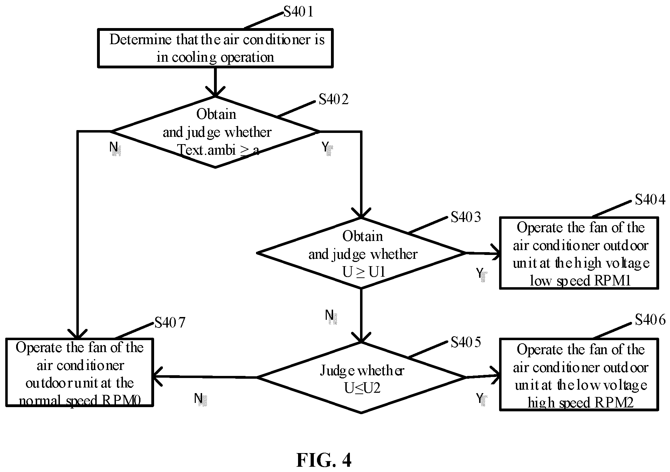

FIG. 4 is a schematic diagram of a specific flow chart of another heat dissipation processing method for an air conditioner outdoor unit provided by an embodiment of the present disclosure, which specifically includes the following steps S401 to S407 as shown in FIG. 4:

S401. Determine that the air conditioner is in cooling operation.

S402. Obtain and judge whether the ambient temperature T_{exta.mbi} is greater than or equal to the first preset temperature a. If T_{ext.ambi} ≥ a, step 403 is executed, and if T_{ext.ambi} < a, step S407 is executed.

S403. Obtain and judge whether the voltage U of the air conditioner outdoor unit is greater than or equal to the first preset voltage Ui If U≥U₁, step S404 is executed, and if U<Ui, step S405 is executed

S404. Operate the fan of the air conditioner outdoor unit at the high voltage low speed RPM₁.

S405. Judge whether the voltage U of the air conditioner outdoor unit is greater than or equal to the first preset voltage U_{2.} If U≤U₂, step S406 is executed, and if U<U₂, step S407 is executed.

S406. Operate the fan of the air conditioner outdoor unit at the low voltage high speed RPM₂.

S407. Operate the fan of the air conditioner outdoor unit at the normal speed RPM₀.

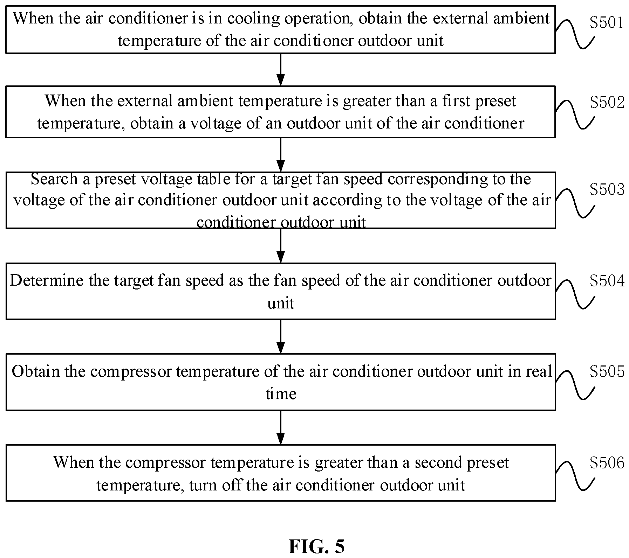

FIG. 5 is a schematic diagram of a specific flow chart of another heat dissipation processing method for an air conditioner outdoor unit provided by an embodiment of the present disclosure, which specifically includes the following steps S501 to S506 as shown in FIG. 5:

S501. When the air conditioner is in cooling operation, obtain the external ambient temperature of the air conditioner outdoor unit.

S502. When the external ambient temperature is greater than a first preset temperature, obtain a voltage of an outdoor unit of the air conditioner.

Steps S501 and S502 are the same as the above-mentioned steps S201 and S202, and are not described again here.

S503. Search a preset voltage table for a target fan speed corresponding to the voltage of the air conditioner outdoor unit according to the voltage of the air conditioner outdoor unit.

In specific implementation, a plurality of voltage sections may be set in a preset voltage table, corresponding to different fan speeds respectively, and the target fan speed corresponding to the voltage of the air conditioner outdoor unit is searched in the preset voltage table according to the voltage of the air conditioner outdoor unit.

In one embodiment, four target fan speeds are selected according to the table below to ensure that the temperature rise of the fan module is slightly lower than the temperature rise of the compressor module. This allows the temperature rise reliability of the compressor module and the fan module to be protected only by the temperature sensor inside the compressor module.

| Outdoor unit voltage U | U<U₅ | U5≤U<U4 | U4≤U<U3 | U₃≤U |
|---|---|---|---|---|
| Fan speed RPM | RPM₆ | RPM₅ | RPM₄ | RPM₃ |

S504: Determine the target fan speed as the fan speed of the air conditioner outdoor unit.

S505. Obtain the compressor temperature of the air conditioner outdoor unit in real time.

In specific implementation, the temperature sensor is used to obtain the compressor temperature of the air conditioner outdoor unit in real time. The specific interval time can be set according to actual conditions, such as 1 second, 15 seconds, etc.

S506. When the compressor temperature is greater than a second preset temperature, turn off the air conditioner outdoor unit.

In specific implementation, when the compressor temperature is greater than the second preset temperature, the air conditioner outdoor unit is turned off. For example, if the second preset temperature is set to 80 degrees Celsius, the air conditioner outdoor unit is turned off if the compressor temperature obtained in real time is greater than 80 degrees Celsius, thereby protecting the air conditioner from overheating and damage. In this step, other protection mechanisms for the compressor can be further set, such as limiting the compressor frequency when the temperature reaches 90 degrees Celsius; controlling the compressor to reduce frequency when it reaches 95 degrees Celsius; and triggering shutdown protection when it reaches 100 degrees Celsius. The specific setting method is not limited in the embodiments of the present disclosure.

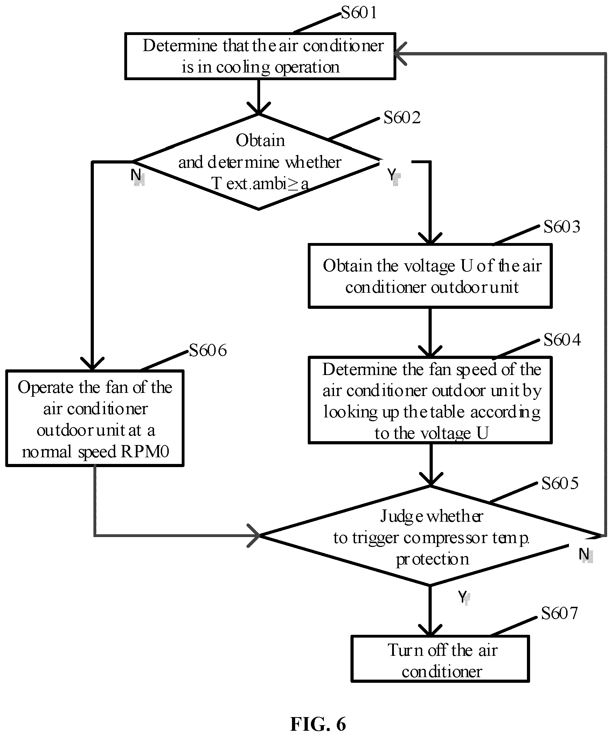

FIG. 6 is a schematic diagram of a specific flow chart of another heat dissipation processing method for air conditioner outdoor unit provided by an embodiment of the present disclosure, which specifically includes the following steps S601 to S607 as shown in FIG. 6:

S601. Determine that the air conditioner is in cooling operation.

S602. Obtain and determine whether the ambient temperature T_{ext.ambi} is greater than or equal to the first preset temperature a. If T_{ext.ambi} a, step S603 is executed, and if T_{ext.ambi} < a, step S606 is executed.

S603. Obtain the voltage U of the air conditioner outdoor unit.

S604. Determine the fan speed of the air conditioner outdoor unit by looking up the table according to the voltage U.

S605. Judge whether to trigger the compressor module temperature protection. The compressor module temperature protection is triggered when the compressor temperature is greater than the second preset temperature. If the compressor module temperature protection is triggered, step S607 is executed; and if the compressor module temperature protection is not triggered, maintain the current fan speed unchanged and continue to execute step S601.

S606. Operate the fan of the air conditioner outdoor unit at a normal speed RPMo, and then execute step S605.

S607. Turn off the air conditioner.

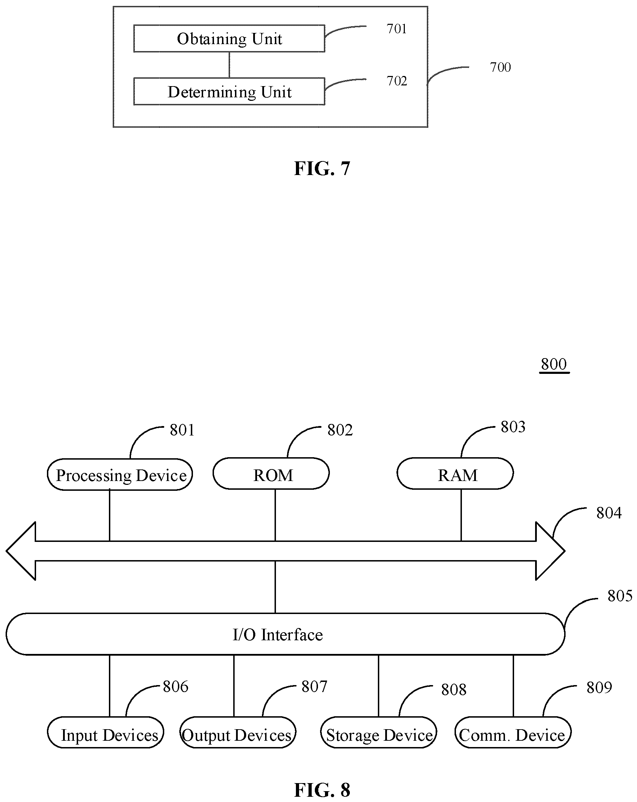

FIG. 7 is a schematic diagram of the structure of the heat dissipation processing apparatus of the air conditioner outdoor unit provided in the embodiment of the present disclosure. The heat dissipation processing apparatus 700 of the air conditioner outdoor unit provided in the embodiment of the present disclosure can execute the processing flow provided in the heat dissipation processing method embodiment of the air conditioner outdoor unit. As shown in FIG. 7, the heat dissipation processing apparatus 700 of the air conditioner outdoor unit includes an obtaining unit 701 and a determining unit 702, wherein:

The obtaining unit 701 is configured to obtain the voltage of the outdoor unit of the air conditioner when the air conditioner is in cooling operation; and

The determining unit 702 is configured to determine the fan speed of the air conditioner outdoor unit according to the voltage of the air conditioner outdoor unit.

In a possible implementation, in the apparatus provided in the embodiment of the present disclosure, the obtaining unit 701 is further configured to:
obtain an external ambient temperature of the air conditioner outdoor unit during the cooling operation; and
obtain the voltage of the air conditioner outdoor unit in a case that the external ambient temperature is greater than a first preset temperature.

In a possible implementation, in the apparatus provided in the embodiment of the present disclosure, the determining unit 702 is further configured to:
determine a first speed as the fan speed in a case that the voltage of the air conditioner outdoor unit is greater than a first preset voltage;
determine a second speed as the fan speed in a case that the voltage of the air conditioner outdoor unit is less than the first preset voltage and greater than a second preset voltage; and
determine a third speed as the fan speed in a case that the voltage of the air conditioner outdoor unit is less than the second preset voltage, wherein the first speed is less than the second speed, and the second speed is less than the third speed.

In a possible implementation, in the apparatus provided in the embodiment of the present disclosure, the determining unit 702 is further configured to:
search a preset voltage table for a target fan speed corresponding to the voltage of the air conditioner outdoor unit according to the voltage of the air conditioner outdoor unit; and
determine the target fan speed as the fan speed of the air conditioner outdoor unit.

In a possible implementation, in the apparatus provided in the embodiment of the present disclosure, the determining unit 702 is further configured to:
acquire a compressor temperature of the air conditioner outdoor unit in real time; and
turn off the air conditioner outdoor unit in a case that the compressor temperature is greater than a second preset temperature.

In a possible implementation, in the apparatus provided in the embodiment of the present disclosure, the determining unit 702 is further configured to:
acquire a fan temperature of the air conditioner outdoor unit in real time; and
correct the fan speed in a case that a difference between the compressor temperature and the fan temperature is greater than a third preset temperature.

In a possible implementation, in the apparatus provided in the embodiment of the present disclosure, the determining unit 702 is further configured to:
determine a fan speed correction value according to a ratio of the difference to the external ambient temperature in the case that the difference between the compressor temperature and the fan temperature is greater than the third preset temperature; and
correct the fan speed based on the fan speed correction value.

The heat dissipation processing apparatus of the air conditioner outdoor unit in the embodiment shown in FIG. 7 can be used to implement the technical solution of the above-mentioned method embodiment. Its implementation principle and technical effect are similar and will not be described in detail here.

In addition, the heat dissipation processing method and apparatus of the air conditioner outdoor unit of the embodiment of the present application described in conjunction with FIGS. 1 to 7 can be implemented by an electronic device. FIG. 8 shows a hardware structure diagram of an electronic device provided in an embodiment of the present application.

As shown in FIG. 8, the electronic device 800 may include a processing device (e.g., a central processing unit, a graphics processing unit, etc.) 801, which can perform various appropriate actions and processes according to a program stored in a read-only memory (ROM) 802 or a program loaded from a storage device 808 to a random access memory (RAM) 803 to implement the heat dissipation processing method of the air conditioner outdoor unit according to the embodiment described in the present disclosure. In RAM 803, various programs and data required for the operation of the electronic device 800 are also stored. The processing device 801, ROM 802, and RAM 803 are connected to each other via a bus 804. An input/output (I/O) interface 805 is also connected to the bus 804.

Typically, the following devices may be connected to the I/O interface 805: input devices 806 including, for example, a touch screen, a touchpad, a keyboard, a mouse, a camera, a microphone, an accelerometer, a gyroscope, etc.; output devices 807 including, for example, a liquid crystal display (LCD), a speaker, a vibrator, etc.; storage devices 808 including, for example, a magnetic tape, a hard disk, etc.; and communication devices 809. The communication device 809 may allow the electronic device 800 to communicate wirelessly or wired with other devices to exchange data. Although FIG. 8 shows an electronic device 800 with various devices, it should be understood that it is not required to implement or have all the devices shown. More or fewer devices may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a non-transitory computer-readable medium, and the computer program includes a program code for executing the method shown in the flowchart, thereby implementing the voice control method as described above. In such an embodiment, the computer program can be downloaded and installed from the network through the communication device 809, or installed from the storage device 808, or installed from the ROM 802. When the computer program is executed by the processing device 801, the above-mentioned functions defined in the method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, device or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, device or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

In some embodiments, the client and the server may communicate using any currently known or future developed network protocol such as HTTP (HyperText Transfer Protocol), and may be interconnected with any form or medium of digital data communication (e.g., a communication network). Examples of communication networks include a local area network ("LAN"), a wide area network ("WAN"), an internet (e.g., the Internet), and a peer-to-peer network (e.g., an ad hoc peer-to-peer network), as well as any currently known or future developed network.

The computer-readable medium may be included in the electronic device, or may exist independently without being installed in the electronic device.

The computer-readable medium carries one or more programs. When the one or more programs are executed by the electronic device, the electronic device:
obtaining the voltage of the air conditioner outdoor unit when the air conditioner is in cooling operation; and
determining the fan speed of the air conditioner outdoor unit according to the voltage of the air conditioner outdoor unit.

Optionally, when the above one or more programs are executed by the electronic device, the electronic device may also execute other steps described in the above embodiments.

The computer program code for carrying out operations of the present disclosure may be written in one or more programming languages, or a combination thereof, including, but not limited to, object-oriented programming languages, such as Java, Smalltalk, C++, and conventional procedural programming languages, such as "C" or similar programming languages. The program code may be executed entirely on the user's computer, partially on the user's computer, as a separate software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each box in the flow chart or block diagram can represent a module, a program segment or a part of a code, and the module, the program segment or a part of the code contains one or more executable instructions for realizing the specified logical function. It should also be noted that in some implementations as replacements, the functions marked in the box can also occur in a sequence different from that marked in the accompanying drawings. For example, two boxes represented in succession can actually be executed substantially in parallel, and they can sometimes be executed in the opposite order, depending on the functions involved. It should also be noted that each box in the block diagram and/or flow chart, and the combination of the boxes in the block diagram and/or flow chart can be implemented with a dedicated hardware-based system that performs a specified function or operation, or can be implemented with a combination of dedicated hardware and computer instructions.

The units involved in the embodiments described in the present disclosure may be implemented by software or hardware, wherein the name of a unit does not, in some cases, limit the unit itself.

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, apparatus, or device. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

Embodiments of the present disclosure provide a heat dissipation processing method for an air conditioner outdoor unit, including:
First, when the air conditioner is in cooling operation, the voltage of the outdoor unit of the air conditioner is obtained, and then the fan speed of the outdoor unit of the air conditioner is determined based on the voltage of the outdoor unit of the air conditioner. Using the heat dissipation processing method of the outdoor unit of the air conditioner provided by the present disclosure, the temperature rise of each component of the air conditioner can be improved and balanced by adjusting the fan speed of the outdoor unit of the air conditioner, so that the air conditioner has a significantly improved heat dissipation effect under high ambient temperatures when the temperature of the outdoor unit is high, thereby improving the cooling capacity and operational reliability of air conditioners under high temperature conditions.

Those skilled in the art will appreciate that the embodiments of the present application may be provided as methods, systems, or computer program products. Therefore, the present application may adopt the form of a complete hardware embodiment, a complete software embodiment, or an embodiment combining software and hardware. Moreover, the present application may adopt the form of a computer program product implemented on one or more computer-usable storage media (including but not limited to disk storage, CD-ROM, optical storage, etc.) containing computer-usable program codes.

The present application is described with reference to the flowcharts and/or block diagrams of the methods, devices (systems), and computer program products according to the embodiments of the present application. It should be understood that each process and/or box in the flowchart and/or block diagram, as well as the combination of the processes and/or boxes in the flowchart and/or block diagram, can be implemented by computer program instructions. These computer program instructions can be provided to a processor of a general-purpose computer, a special-purpose computer, an embedded processor, or other programmable data processing device to generate a machine, so that the instructions executed by the processor of the computer or other programmable data processing device generate a device for implementing the functions specified in one process or multiple processes in the flowchart and/or one box or multiple boxes in the block diagram.

These computer program instructions may also be stored in a computer-readable memory that can direct a computer or other programmable data processing device to operate in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Although the preferred embodiments of the present application have been described, those skilled in the art may make additional changes and modifications to these embodiments once they have learned the basic creative concept. Therefore, the appended claims are intended to be interpreted as including the preferred embodiments and all changes and modifications falling within the scope of the present application.

## Claims

1. A heat dissipation processing method for an air conditioner outdoor unit, comprising:
obtaining a voltage of an air conditioner outdoor unit during a cooling operation; and
determining a fan speed of the air conditioner outdoor unit according to the voltage of the air conditioner outdoor unit.

2. The heat dissipation processing method for air conditioner outdoor unit according to claim 1, wherein the obtaining the voltage of the air conditioner outdoor unit during the air conditioning cooling mode comprises:
obtaining an external ambient temperature of the air conditioner outdoor unit during the cooling operation; and
obtaining the voltage of the air conditioner outdoor unit in a case that the external ambient temperature is greater than a first preset temperature.

3. The heat dissipation processing method for air conditioner outdoor unit according to claim 1 or 2, wherein the determining the fan speed of the air conditioner outdoor unit according to the voltage of the air conditioner outdoor unit comprises:
determining a first speed as the fan speed in a case that the voltage of the air conditioner outdoor unit is greater than a first preset voltage;
determining a second speed as the fan speed in a case that the voltage of the air conditioner outdoor unit is less than the first preset voltage and greater than a second preset voltage; and
determining a third speed as the fan speed in a case that the voltage of the air conditioner outdoor unit is less than the second preset voltage, wherein the first speed is less than the second speed, and the second speed is less than the third speed.

4. The heat dissipation processing method for air conditioner outdoor unit according to any one of the preceding claims, wherein the determining the fan speed of the air conditioner outdoor unit according to the voltage of the air conditioner outdoor unit comprises:
searching a preset voltage table for a target fan speed corresponding to the voltage of the air conditioner outdoor unit according to the voltage of the air conditioner outdoor unit; and
determining the target fan speed as the fan speed of the air conditioner outdoor unit.

5. The heat dissipation processing method for air conditioner outdoor unit according to any one of the preceding claims, further comprising:
acquiring a compressor temperature of the air conditioner outdoor unit in real time; and
turning off the air conditioner outdoor unit in a case that the compressor temperature is greater than a second preset temperature.

6. The heat dissipation processing method for air conditioner outdoor unit according to claim 5, further comprising:
acquiring a fan temperature of the air conditioner outdoor unit in real time; and
correcting the fan speed in a case that a difference between the compressor temperature and the fan temperature is greater than a third preset temperature.

7. The heat dissipation processing method for air conditioner outdoor unit according to claim 6, wherein the correcting the fan speed in the case that the difference between the compressor temperature and the fan temperature is greater than the third preset temperature comprises:
determining a fan speed correction value according to a ratio of the difference to the external ambient temperature in the case that the difference between the compressor temperature and the fan temperature is greater than the third preset temperature; and
correcting the fan speed based on the fan speed correction value.

8. A heat dissipation processing apparatus for air conditioner outdoor unit, comprising:
an obtaining unit, configured to obtain a voltage of an air conditioner outdoor unit during a cooling operation; and
a determining unit, configured to determine a fan speed of the air conditioner outdoor unit according to the voltage of the air conditioner outdoor unit.

9. The heat dissipation processing apparatus for air conditioner outdoor unit according to claim 8, wherein the obtaining unit is further configured to:
obtain an external ambient temperature of the air conditioner outdoor unit during the cooling operation; and
obtain the voltage of the air conditioner outdoor unit in a case that the external ambient temperature is greater than a first preset temperature.

10. The heat dissipation processing apparatus for air conditioner outdoor unit according to claim 8 or 9, wherein the determining unit is further configured to:
determine a first speed as the fan speed in a case that the voltage of the air conditioner outdoor unit is greater than a first preset voltage;
determine a second speed as the fan speed in a case that the voltage of the air conditioner outdoor unit is less than the first preset voltage and greater than a second preset voltage; and
determine a third speed as the fan speed in a case that the voltage of the air conditioner outdoor unit is less than the second preset voltage, wherein the first speed is less than the second speed, and the second speed is less than the third speed.

11. The heat dissipation processing apparatus for air conditioner outdoor unit according to any one of claims 8 to 10, wherein the determining unit is further configured to:
search a preset voltage table for a target fan speed corresponding to the voltage of the air conditioner outdoor unit according to the voltage of the air conditioner outdoor unit; and
determine the target fan speed as the fan speed of the air conditioner outdoor unit.

12. The heat dissipation processing apparatus for air conditioner outdoor unit according to any one of claims 8 to 11, wherein the determining unit is further configured to:
acquire a compressor temperature of the air conditioner outdoor unit in real time; and
turn off the air conditioner outdoor unit in a case that the compressor temperature is greater than a second preset temperature.

13. The heat dissipation processing apparatus for air conditioner outdoor unit according to claim 12, wherein the determining unit is further configured to:
acquire a fan temperature of the air conditioner outdoor unit in real time; and
correct the fan speed in a case that a difference between the compressor temperature and the fan temperature is greater than a third preset temperature.

14. The heat dissipation processing apparatus for air conditioner outdoor unit according to claim 13, wherein the determining unit is further configured to:
determine a fan speed correction value according to a ratio of the difference to the external ambient temperature in the case that the difference between the compressor temperature and the fan temperature is greater than the third preset temperature; and
correct the fan speed based on the fan speed correction value.

15. A computer program comprising computer program instructions, wherein when the computer program instructions are executed by a processor, the heat dissipation processing method for an air conditioner outdoor unit according to any one of claims 1 to 7 is implemented.
